# EUROPÄISCHE PATENTANMELDUNG

(11) **EP 4 484 255 A1**
(43) Veröffentlichungstag der Anmeldung: **01.01.2025**
(21) Anmeldenummer: 24168616.1
(22) Anmeldetag: 05.04.2024
(51) Int. Cl.: B62D 5/093, B62D 6/00, B62D 1/22

(54) **LENKSYSTEM FÜR EINE LANDWIRTSCHAFTLICHE ARBEITSMASCHINE**

(30) Priorität: 27.06.2023 DE 102023116865
(71) Anmelder: CLAAS Tractor S.A.S., 78141 Vélizy-Villacoublay Cedex (FR)
(72) Erfinder: Gilles, Vincent, 72540 CRANNES EN CHAMPAGNE (FR)
(74) Vertreter: CLAAS Gruppe

(57) **Zusammenfassung**

Die vorliegende Erfindung betrifft ein Lenksystem (8) für eine landwirtschaftliche Arbeitsmaschine (1). Das Lenksystem (8) umfasst zumindest einen Lenkzylinder (9) zur Änderung eines Einschlagwinkels von Bodeneingriffsmitteln (4) der landwirtschaftlichen Arbeitsmaschine (1), ein hydraulisches Hauptlenkventil (10) zur Druckbeaufschlagung des mindestens einen Lenkzylinders (9), einen Lenksignalgeber (14) zur Betätigung des Hauptlenkventils (10) und eine schaltbare Ventileinrichtung (19), mittels der ein Reaktionsverhalten oder ein Nichtreaktionsverhalten des Lenksystems (8) einstellbar ist. Das Lenksystem (8) ist dadurch gekennzeichnet, dass es eine Recheneinheit (20) umfasst, die mit mindestens einer Sensoreinrichtung (21) an der landwirtschaftlichen Arbeitsmaschine (1) zur Übertragung von Daten verbunden ist. Die Recheneinheit (20) ist dazu vorgesehen und eingerichtet, anhand von Daten der Sensoreinrichtung (21) einen Betriebszustand "Straße" (S) oder einen Betriebszustand "Feld" (F) der landwirtschaftlichen Arbeitsmaschine (1) zu detektieren und basierend auf dem detektierten Betriebszustand "Straße" (S) oder "Feld" (F) die Ventileinrichtung (19) zur Einstellung des Reaktionsverhaltens oder des Nichtreaktionsverhaltens des Lenksystems (8) anzusteuern.

## Beschreibung

Die vorliegende Erfindung betrifft ein Lenksystem für eine landwirtschaftliche Arbeitsmaschine, insbesondere einen Traktor, gemäß dem Oberbegriff des unabhängigen Patentanspruchs 1, eine landwirtschaftliche Arbeitsmaschine, insbesondere einen Traktor, mit einem solchen Lenksystem gemäß dem Oberbegriff des unabhängigen Patentanspruchs 12 sowie ein Verfahren zum Ansteuern eines solchen Lenksystems gemäß dem Oberbegriff des unabhängigen Patentanspruchs 15.

Es ist bekannt, Lenksysteme für Fahrzeuge derart auszulegen, dass diese bei verschiedenen vorliegenden Randbedingungen im Betrieb ein hierfür angepasstes bzw. optimiertes Lenkverhalten annehmen. So ist es insbesondere bekannt, Lenksysteme derart auszulegen, dass diese in gewissen Betriebssituationen ein Reaktionsverhalten annehmen in anderen Betriebssituationen hingegeben ein sogenanntes Nichtreaktionsverhalten. Das Reaktionsverhalten zeichnet sich dadurch aus, dass während des Betriebs auf die Bodeneingriffsmittel wirkende und eine Richtungsänderung verursachende Fahrwiderstände auf das Lenkrad übertragen werden, das Nichtreaktionsverhalten sorgt hingegen dafür, dass derartige Fahrwiderstände gerade nicht auf das Lenkrad übertragen werden.

Insbesondere im Kontext von landwirtschaftlichen Arbeitsmaschinen, sind diese beiden Verhaltensweisen eines Lenksystems aufgrund der regelmäßig wechselnden Betriebssituationen von besonderer Bedeutung. Bei dem Betrieb eines Traktors ist es häufig so, dass sich dieser zeitweise auf der Straße bewegt, beispielsweise dann, wenn ein Arbeitsauftrag auf einem Feld erledigt werden soll und der Traktor hierfür vom Hof zum Feld fahren muss. Während der Fahrt auf der Straße ist ein Reaktionsverhalten des Lenksystems wünschenswert, da ein solches Verhalten aufgrund eines Nachführens des Lenkrads in der Neutralstellung aufgrund von Rückstellbewegungen der Räder nach Einwirken von Fahrwiderständen einen hohen Fahrkomfort bedingt. Während der Durchführung eines Arbeitsauftrags auf dem Feld ist das Reaktionsverhalten aufgrund der Bodenbeschaffenheit nachteilig und würde dazu führen, dass die Bewegung eines Traktors entlang einer Fahrspur nur mit hohem Aufwand möglich wäre. Hier ist daher ein Nichtreaktionsverhalten des Lenksystems von Vorteil, wodurch sich die Fahrwiderstände bei Neutralstellung des Lenkrads, also Geradeausfahrt, gerade nicht auswirken, dieses Verhalten somit insbesondere von Vorteil bei einer automatischen und/oder ferngesteuerten Führung auf dem Feld, beispielsweise mittels eines GPS-Signals oder mittels Sensorsystemen.

Aus der DE 198 44 331 C2 ist beispielsweise ein hydraulisches Zweikreis-Lenksystem bekannt, bei dem jeder Kreis eine Steuereinheit und einen hiermit über Motorleitungen verbundenen Lenkmotor aufweist, ein gemeinsames Lenkorgan und ein gemeinsames Lenkgestänge für beide Steuereinheiten vorgesehen ist und ein Umschaltventil alternativ die Motorleitungen des einen Kreises oder die Motorleitungen des anderen Kreises miteinander verbindet, so dass jeweils einer der Kreise wirksam und der andere Kreis unwirksam ist. Der erste Kreis kann dabei über wesentliche Abschnitte des Lenkweges ein Nichtreaktionsverhalten, auch als non-reaction-Verhalten bezeichnet, bereitstellen, der zweite Kreis hingegen ein Reaktionsverhalten, auch als reaction-Verhalten bezeichnet. Das Umschalten zwischen den Kreisen erfolgt dabei anhand eines Parameters, der vom Lenkweg oder von der Zeit abhängig ist.

Zwar ist demnach grundsätzlich ein Umschalten zwischen Reaktionsverhalten und Nichtreaktionsverhalten möglich, jedoch erfolgt dieses ausschließlich entweder in Abhängigkeit vom Lenkweg oder in Abhängigkeit von der Zeit. Umgebungsbedingungen bzw. Betriebssituationen des Fahrzeugs bleiben dabei allerdings gänzlich unberücksichtigt, wodurch ein Betrieb mit Reaktionsverhalten oder Nichtreaktionsverhalten sowohl bei einem Betrieb auf der Straße als auch bei einem Betrieb auf einem anderen Untergrund erlaubt wird. Wie dargelegt, ist bei landwirtschaftlichen Arbeitsmaschinen allerdings eine Unterscheidung zwischen Straßenfahrt und Feldfahrt und ein entsprechendes Umschalten des Verhaltens von erheblichem Vorteil, insbesondere dann, wenn die landwirtschaftliche Arbeitsmaschine autonom betrieben wird, somit ein Bediener eine Entscheidung zum Umschalten nicht mehr treffen könnte.

Ausgehend hiervon ist es demnach die Aufgabe der vorliegenden Erfindung die beschriebenen Nachteile des Standes der Technik auszuräumen und insbesondere ein Lenksystem für eine landwirtschaftliche Arbeitsmaschine anzugeben, das eine betriebssituationsabhängige Einstellung eines Reaktions- oder Nichtreaktionsverhaltens erlaubt.

Diese Aufgabe wird erfindungsgemäß durch die Merkmale des unabhängigen Patentanspruchs 1 gelöst, wobei vorteilhafte Weiterbildungen des erfindungsgemäßen Lenksystems Gegenstand der entsprechenden abhängigen Patentansprüche 2 bis 11 sind.

Demnach betrifft die vorliegende Erfindung ein Lenksystem für eine landwirtschaftliche Arbeitsmaschine, insbesondere einen Traktor, wobei das Lenksystem zumindest einen Lenkzylinder zur Änderung eines Einschlagwinkels von Bodeneingriffsmitteln einer lenkbaren Achse der landwirtschaftlichen Arbeitsmaschine, ein hydraulisches Hauptlenkventil zur Druckbeaufschlagung des mindestens einen Lenkzylinders, einen Lenksignalgeber zur Betätigung des Hauptlenkventils und eine schaltbare Ventileinrichtung, mittels der ein Reaktionsverhalten oder ein Nichtreaktionsverhalten des Lenksystems einstellbar ist, umfasst. Das Lenksystem ist dadurch gekennzeichnet, dass das Lenksystem eine Recheneinheit umfasst, die mit mindestens einer Sensoreinrichtung an der landwirtschaftlichen Arbeitsmaschine zur Übertragung von Daten verbunden ist. Die Recheneinheit ist dazu vorgesehen und eingerichtet, anhand von Daten der Sensoreinrichtung einen Betriebszustand "Straße" oder einen Betriebszustand "Feld" der landwirtschaftlichen Arbeitsmaschine zu detektieren und basierend auf dem detektierten Betriebszustand "Straße" oder "Feld" die Ventileinrichtung zur Einstellung des Reaktionsverhaltens oder des Nichtreaktionsverhaltens des Lenksystems, vorzugsweise automatisch, anzusteuern.

Das erfindungsgemäße Lenksystem für eine landwirtschaftliche Arbeitsmaschine hat eine Reihe von Vorteilen. Die Ansteuerung der Ventileinrichtung auf Basis eines detektierten Betriebszustands erlaubt es je nach Untergrund, auf dem sich die landwirtschaftliche Arbeitsmaschine bewegt, das hierfür optimale Verhalten des Lenksystems einzustellen, sodass bei einer Straßenfahrt ein hoher Komfort, bei einer Feldfahrt hingegen das Einhalten der gewünschten Fahrspur erzielt wird. Eine Einstellung anhand von Maschinenparametern oder Zeitparametern, die einem wechselnden Untergrund keinerlei Rechnung tragen, wird gerade nicht vorgenommen. Weiter wird durch die Nutzung der Sensoreinrichtung in Kombination mit der Recheneinheit zwecks Detektion des jeweiligen Betriebszustands während des Betriebs der landwirtschaftlichen Arbeitsmaschine eine Möglichkeit zur Einstellung des Verhaltens des Lenksystems geschaffen, die sowohl bei einem Betrieb mit einem Fahrer als auch bei einem fahrerlosen Betrieb, beispielsweise bei einer autonomen landwirtschaftlichen Arbeitsmaschine, eine erhebliche Unterstützung darstellt. Wird die Arbeitsmaschine beispielsweise von einem Fahrer gesteuert, so kann dieser von der Aufgabe entbunden werden, die Einstellung des Verhaltens des Lenksystems selbstständig vorzunehmen. Hierdurch kann der Fahrer seinen Fokus auf andere wesentliche Aspekte richten, die es während des Betriebs zu überwachen und einzustellen gibt. Bei einer Anwendung im Kontext autonomer landwirtschaftlicher Arbeitsmaschinen schafft die Ausgestaltung eine einfache Möglichkeit das Verhalten des Lenksystems umzuschalten, ohne irgendjemanden, beispielsweise einen sich von der Arbeitsmaschine entfernt befindenden Supervisor, einbeziehen zu müssen.

Gemäß einer vorteilhaften Weiterbildung der Erfindung ist vorgesehen, dass die Recheneinheit dazu vorgesehen und eingerichtet ist, die Ventileinrichtung derart anzusteuern, dass sich bei detektiertem Betriebszustand "Straße" das Reaktionsverhalten des Lenksystems und bei detektiertem Betriebszustand "Feld" das Nichtreaktionsverhalten des Lenksystems einstellt.

Somit ergibt sich für den jeweiligen Betriebszustand bzw. die jeweilige Betriebssituation, also Straßenfahrt oder Feldfahrt, ein optimales Verhalten des Lenksystems.

Gemäß einer vorteilhaften Weiterbildung der Erfindung ist vorgesehen, dass der mindestens eine Lenkzylinder zwei Zylinderräume umfasst, wobei bei eingestelltem Reaktionsverhalten des Lenksystems die beiden Zylinderräume des Lenkzylinders mittels der Ventileinrichtung hydraulisch miteinander verbunden sind.

Gemäß einer vorteilhaften Weiterbildung der Erfindung ist vorgesehen, dass bei eingestelltem Nichtreaktionsverhalten des Lenksystems die beiden Zylinderräume mittels der Ventileinrichtung hydraulisch voneinander getrennt sind.

Die Kopplung oder Entkopplung der beiden Zylinderräume über die beiden Schaltstellungen der Ventileinrichtung erlaubt eine besonders einfache und kostengünstige Ausgestaltung, die es erlaubt zwischen dem Reaktionsverhalten und dem Nichtreaktionsverhalten des Lenksystems umzuschalten, ohne dass die hydraulische Architektur des Lenksystems aufwendig umgestaltet werden muss.

Gemäß einer vorteilhaften Weiterbildung der Erfindung ist vorgesehen, dass das Lenksystem ein Steuerventil umfasst, das mit der Ventileinrichtung zum Schalten derselben hydraulisch und mit der Recheneinheit zur Übertragung von Daten verbunden ist, wobei die Recheneinheit dazu vorgesehen und eingerichtet ist, das Steuerventil zum Schalten der Ventileinrichtung anzusteuern.

Gemäß einer vorteilhaften Weiterbildung der Erfindung ist vorgesehen, dass das Steuerventil als ein elektrisch ansteuerbares Wegeventil, vorzugsweise Wege-Proportionalventil, und die Ventileinrichtung als hydraulisch ansteuerbares Wegeventil ausgeführt ist.

Die Verwendung eines zusätzlichen Steuerventils, welches die Ventileinrichtung auf Anweisung der Recheneinheit zwecks Schaltung zwischen Reaktionsverhalten und Nichtreaktionsverhalten ansteuert, begünstigt ebenfalls einen unkomplizierten hydraulischen Aufbau des Lenksystems und ermöglicht trotz alledem ein schnelles Umschalten zwischen Reaktionsverhalten und Nichtreaktionsverhalten. Ferner kann bei der Wahl der Ventileinrichtung auf eine kostenintensive Ausgestaltung verzichtet werden, da das Steuerventil die Ventileinrichtung hydraulisch ansteuert.

Gemäß einer vorteilhaften Weiterbildung der Erfindung ist vorgesehen, die mindestens eine Sensoreinrichtung eine Sensoreinrichtung zur Erfassung von Bilddaten ist, wobei die Recheneinheit dazu vorgesehen und eingerichtet ist, die von der Sensoreinrichtung erfassten Bilddaten in einer Bildverarbeitungsroutine zur Bestimmung des Betriebszustands "Straße" oder des Betriebszustands "Feld" der landwirtschaftlichen Arbeitsmaschine zu verarbeiten.

Die Nutzung einer oder mehrerer Bilddaten erfassenden Sensoreinrichtungen und die Verarbeitung der Bilddaten in einer Bildverarbeitungsroutine durch die Recheneinheit erlaubt eine besonders zuverlässige und robuste Bestimmung des Betriebszustands, die einen überschaubaren Rechenaufwand bedarf, sodass die Verarbeitung on-board während des Betriebs erfolgen kann. Hierdurch kann schnell während des Betriebs auf einen sich ändernden Betriebszustand reagiert werden und das Verhalten des Lenksystems eingestellt werden. Beispielsweise können zur Erzeugung der Bilddaten an der landwirtschaftlichen Arbeitsmaschine vorhandene Sensoreinrichtungen, die auch zur Bestimmung anderer Betriebs- und/oder Umgebungsparameter dienen, genutzt werden, solange der Untergrund im Erfassungsbereich der Sensoreinrichtung liegt.

Vorzugsweise ist vorgesehen, dass die Bildverarbeitungsroutine auf künstlicher Intelligenz beruht, vorzugsweise ein trainiertes neuronales Netzwerk nutzt, besonders bevorzugt ein Artificial Neural Network (ANN) oder ein Convolutional Neural Network (CNN).

Weiter vorzugsweise ist vorgesehen, dass die Recheneinheit dazu vorgesehen und eingerichtet ist, eine Segmentierung der Bilddaten vorzunehmen, mittels welcher der Betriebszustand "Straße" oder der Betriebszustand "Feld" der landwirtschaftlichen Arbeitsmaschine bestimmbar ist.

Durch die Verwendung von künstlicher Intelligenz, insbesondere eines trainierten neuronalen Netzwerks, kann die Genauigkeit bei der Bestimmung des Betriebszustands "Straße" oder "Feld" gegenüber klassischen Methoden der Bildverarbeitung, die ebenfalls für die Bestimmung des Betriebszustands "Straße" oder "Feld" genutzt werden können, deutlich gesteigert werden.

Die Bestimmung des Betriebszustands "Straße" oder "Feld" anhand einer Segmentierung des oder der mittels der Sensoreinrichtung erzeugten Bildes, Bilder bzw. Bilddaten, wobei die bei der Segmentierung erzeugten Segmente zumindest zwei Klassen "Straße" und "Feld" zugeordnet werden, ist ein hinsichtlich der erforderlichen Rechenleistung vorteilhaftes Vorgehen, das eine hinreichend zuverlässig, genaue und robuste Ermittlung des Betriebszustands und somit eine zielgerichtete Einstellung des Verhaltens des Lenksystems erlaubt.

Gemäß einer vorteilhaften Weiterbildung der Erfindung ist vorgesehen, dass das Hauptlenkventil ein hydraulisches Hauptlenkventil mit einer festen Übersetzung oder ein elektrohydraulisches Hauptlenkventil mit einer elektrisch einstellbaren Ventilübersetzung ist.

Gemäß einer vorteilhaften Weiterbildung der Erfindung ist vorgesehen, dass das Lenksystem eine Druckversorgungsquelle zur Druckversorgung des Hauptlenkventils umfasst.

Weiterhin wird die erfindungsgemäße Aufgabe von einer landwirtschaftlichen Arbeitsmaschine, insbesondere einem Traktor, mit einem solchen Lenksystem gemäß dem unabhängigen Patentanspruch 12 gelöst.

Gemäß einer vorteilhaften Weiterbildung der Erfindung ist vorgesehen, dass die mindestens eine Sensoreinrichtung des Lenksystems in einem Front-, Heck- und/oder Seitenbereich der landwirtschaftlichen Arbeitsmaschine angeordnet ist.

Gemäß einer vorteilhaften Weiterbildung der Erfindung ist vorgesehen, dass die landwirtschaftliche Arbeitsmaschine eine autonome landwirtschaftliche Arbeitsmaschine, insbesondere ein autonomer Traktor, ist.

Abschließend wird die erfindungsgemäße Aufgabe ferner durch ein Verfahren zum Ansteuern eines solchen Lenksystems gemäß dem unabhängigen Patentanspruch 15 gelöst.

Die vorliegende Erfindung wird nachstehend anhand der in den Figuren abgebildeten Ausführungsformen näher beschrieben.

Es zeigen:
- FIG. 1: eine schematische und exemplarische Ansicht einer erfindungsgemäßen landwirtschaftlichen Arbeitsmaschine in Gestalt eines Traktors; und
- FIG. 2: einen schematischen und exemplarischen Hydraulikschaltplan eines erfindungsgemäßen Lenksystems der erfindungsgemäßen landwirtschaftlichen Arbeitsmaschine aus FIG. 1.

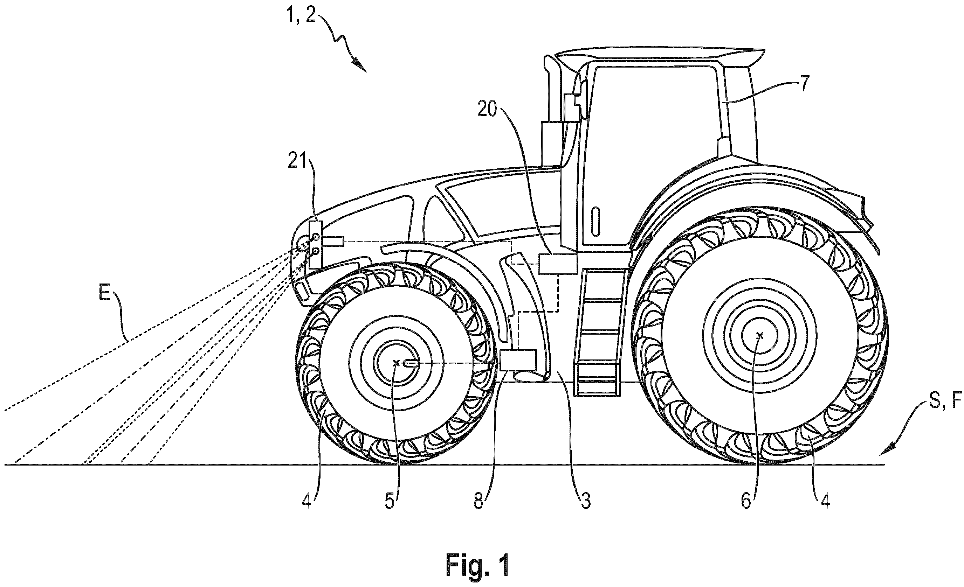

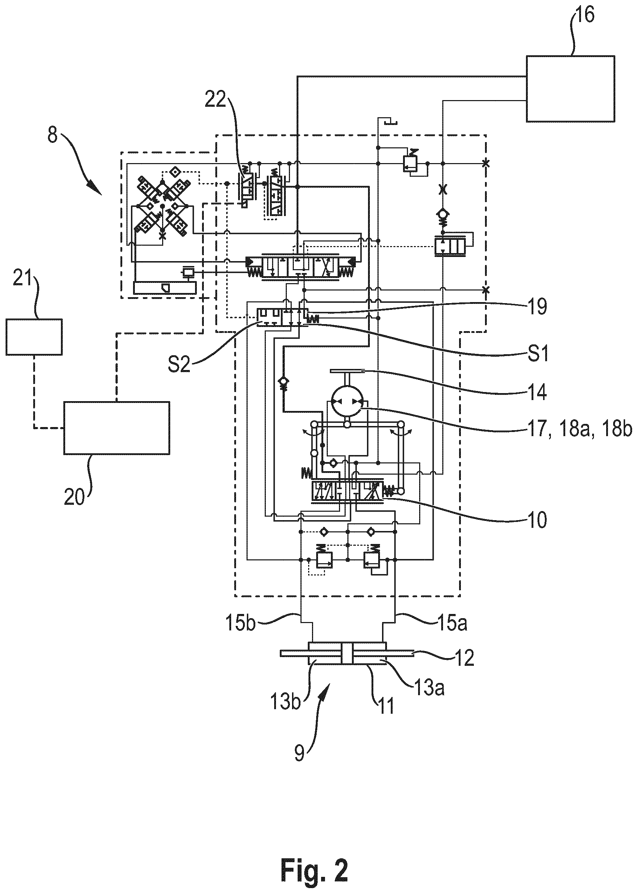

FIG. 1 zeigt eine schematische und exemplarische Darstellung einer landwirtschaftliche Arbeitsmaschine 1 in Gestalt eines Traktors 2. Die als Traktor 2 ausgebildete landwirtschaftliche Arbeitsmaschine 1 umfasst unter anderem eine Karosserie 3, Bodeneingriffsmittel 4, die einer Vorderachse 5 und einer Hinterachse 6 zugeordnet sind, eine auf der Karosserie 3 gelagerte Kabine 7 sowie - in FIG. 1 nicht dargestellte - Arbeitsaggregate. Zum Lenken der landwirtschaftlichen Arbeitsmaschine 1 ist ein Lenksystem 8 vorgesehen, wie in FIG. 1 schematisch und in FIG. 2 im Detail dargestellt. Das Lenksystem 8 umfasst zur Änderung eines Einschlagwinkels der Bodeneingriffsmittel 4 einen Lenkzylinder 9, der mit einem hydraulischen Hauptlenkventil 10 zur Druckbeaufschlagung desselben verbunden ist. Das Hauptlenkventil 10 kann wahlweise als hydraulisches Hauptlenkventil 10 mit einer festen Übersetzung oder ein elektrohydraulisches Hauptlenkventil 10 mit einer elektrisch einstellbaren Ventilübersetzung ausgeführt sein.

Bei der in FIG. 1 gezeigten landwirtschaftlichen Arbeitsmaschine 1 wird die Vorderachse 5 gelenkt, an welcher über Radaufnahmen die Bodeneingriffsmittel 4 angeordnet sind. Der Einschlagwinkel wird durch den Lenkzylinder 9 vorgegeben, und zwar dadurch, dass eine in einem Zylindergehäuse 11 des Lenkzylinders 9 verlagerbare Kolbenstange 12 mit der jeweiligen Radaufnahme verbunden ist. Durch das Zusammenwirken von Zylindergehäuse 11 und Kolbenstange 12 werden im Lenkzylinder 9 zwei Zylinderräume 13a, 13b ausgebildet, die zur Verlagerung der Kolbenstange 12 mit einem hydraulischen Fluid druckbeaufschlagt werden. Auch wenn zuvor die Vorderachse 5 der landwirtschaftlichen Arbeitsmaschine 1 als lenkbar beschrieben wurde, kann dies auch alternativ oder ergänzend für die Hinterachse 6 zutreffend sein, sodass nachfolgend noch im Detail beschriebene erfindungsgemäße Lösung bei landwirtschaftlichen Arbeitsmaschinen 1 mit Vorderachslenkung, Hinterachslenkung oder Allradlenkung Anwendung finden kann. Bei einer Hinterachslenkung oder Allradlenkung würde entsprechend alternativ oder zusätzlich ein Lenkzylinder 9 zuvor beschriebener Ausgestaltung der Hinterachse 6 zugeordnet und mit dem Hauptlenkventil 10 hydraulisch verbunden sein.

Neben dem Lenkzylinder 9 und dem Hauptlenkventil 10 umfasst das Lenksystem 8 weiterhin einen Lenksignalgeber 14, welcher der Betätigung des Hauptlenkventils 10 dient. Der Lenksignalgeber 14 kann als Lenkrad in der Kabine 7 der landwirtschaftlichen Arbeitsmaschine 1, das von einem Bediener der landwirtschaftlichen Arbeitsmaschine 1 betätigbar ist, oder aber auch ein anderweitig ausgestalteter Aktuator sein, der dazu vorgesehen und eingerichtet ist, das Hauptlenkventil 10 anzusteuern bzw. zu betätigen.

Speziell ist das Hauptlenkventil 10 dazu eingerichtet, bei einer Betätigung des Lenksignalgebers 14 aus seiner aktuellen Position, hier also bei einem Drehen des Lenkrads, Hydraulikflüssigkeit entweder in eine erste Hydraulikleitung 15a oder in eine zweite Hydraulikleitung 15b druckbeaufschlagt einzubringen, wobei jeweils eine Hydraulikleitung 15a, 15b mit einem Zylinderraum 13a, 13b des Lenkzylinders 9 hydraulisch verbunden ist. Die Auswahl der jeweiligen Hydraulikleitung 15a, b, in welche die Hydraulikflüssigkeit eingebracht wird, hängt dabei von der Betätigungsrichtung des Lenksignalgebers 14 ab, das Volumen an eingebrachter Hydraulikflüssigkeit von dem Grad der Betätigung des Lenksignalgebers 14. Die Folge ist eine entsprechende Änderung der Position der Kolbenstange 12 des Lenkzylinders 9 - und damit des Einschlagwinkels - sowie ein Rückfluss eines entsprechenden Volumens an Hydraulikflüssigkeit aus der jeweils anderen Hydraulikleitung 15a, b durch das Hauptlenkventil 10. Das Hauptlenkventil 10 wird dabei von einem Hauptleitungssystem 16 mit Hydraulikflüssigkeit versorgt, welche von einer Druckversorgungsquelle 17 - hier einer Pumpe 18a, betrieben von einem Pumpenmotor 18b - gefördert wird. Ohne weitere Betätigung des Hauptlenkventils 10 und nach Abschluss der oben beschriebenen Positionsänderung der Kolbenstangen 12 wird die Hydraulikflüssigkeit von dem Hauptlenkventil 10 in dem Hauptleitungssystem 16 einfach durchgeleitet.

Das Lenksystem 8 umfasst weiterhin eine schaltbare Ventileinrichtung 19, mittels der ein Reaktionsverhalten oder ein Nichtreaktionsverhalten des Lenksystems 8 einstellbar ist. Besagte schaltbare Ventileinrichtung 19 ist vorzugsweise als zwischen zwei Schaltstellungen S1, S2 schaltbares Wegeventil ausgebildet. Vorzugsweise, wie nachfolgend noch beschrieben, wird die Ventileinrichtung 19 hydraulisch angesteuert, sie kann aber auch pneumatisch, elektrisch oder magnetisch angesteuert werden. In der ersten Schaltstellung S1 der Ventileinrichtung 19 sind die Zylinderräume 13a, 13b mittels der Ventileinrichtung 19 hydraulisch miteinander verbunden bzw. gekoppelt, wodurch sich das Reaktionsverhalten des Lenksystems 8 einstellt. In der zweiten Schaltstellung S2 der Ventileinrichtung 19 sind die Zylinderräume 13a, 13b hingegen mittels der Ventileinrichtung 19 hydraulisch voneinander getrennt bzw. entkoppelt, wodurch sich das Nichtreaktionsverhalten des Lenksystems 8 einstellt.

Das Lenksystem 8 umfasst zudem eine Recheneinheit 20, die in den FIGs. 1 und 2 schematisch angedeutet ist. Die Recheneinheit 20 ist mit einer oder mehreren Sensoreinrichtungen 21 zur Übertragung von Daten verbunden. Zur Übertragung von Daten verbunden, bedeutet in diesem Zusammenhang, dass sowohl die Sensoreinrichtung 21 Daten an die Recheneinheit 20 als auch die Recheneinheit 20 Daten an die Sensoreinrichtung 21 übertragen kann. Die Übertragung kann wahlweise kabelgebunden oder drahtlos erfolgen. Die Recheneinheit 20 kann wahlweise als eingeständige Recheneinheit 20 ausgebildet sein und räumlich von der Sensoreinrichtung 21 entfernt angeordnet sein oder aber der Sensoreinrichtung 21 zugeordnet sein und somit räumlich in unmittelbarer Nähe zur Sensoreinrichtung 21 angeordnet sein, beispielsweise mit der Sensoreinrichtung 21 gemeinsam ein Bauteil ausbilden.

Die Recheneinheit 20 ist dazu vorgesehen und eingerichtet, anhand von Daten der Sensoreinrichtung 21, die an die Recheneinheit 20 übermittelt werden, einen Betriebszustand bzw. eine Betriebssituation der landwirtschaftlichen Arbeitsmaschine 1 zu detektieren bzw. zu bestimmen. Die von der Recheneinheit 20 bestimmbaren Betriebszustände sind einerseits der Betriebszustand "Straße" S und andererseits der Betriebszustand "Feld" F. Der Betriebszustand "Straße" S beschreibt einen Betrieb der landwirtschaftlichen Arbeitsmaschine 1 auf einer Straße, also eine Straßenfahrt, beispielsweise von einem Hof zu einem Feld, auf dem ein landwirtschaftlicher Arbeitsauftrag durchgeführt werden soll. Der Betriebszustand "Feld" F beschreibt hingegen einen Betrieb der landwirtschaftlichen Arbeitsmaschine 1 auf einer landwirtschaftlichen Fläche, also eine Fahrt auf einem Feld bzw. einem Acker, wie sie beispielsweise bei der Durchführung eines landwirtschaftlichen Arbeitsauftrags erfolgt. Die eine oder mehreren Sensoreinrichtungen 21 können wahlweise in einen Frontbereich, einem Heckbereich und/oder einem Seitenbereich der landwirtschaftlichen Arbeitsmaschine 1 angeordnet sein, wichtig ist dabei allerdings, dass sich der Untergrund, auf dem sich die landwirtschaftliche Arbeitsmaschine 1 befindet oder bewegt, im Erfassungsbereich E der Sensoreinrichtung 21, wie in FIG. 1 dargestellt, befindet.

Die eine oder die mehreren Sensoreinrichtungen 21 sind dabei als Sensoreinrichtungen 21 zur Erfassung von Bilddaten, also Kamerasystemen, ausgeführt. Besagte Sensoreinrichtungen 21 können dabei als Monokamera, Stereokamera und/oder dergleichen ausgeführt sein. Die Bilddaten der einen oder mehreren Sensoreinrichtungen 21, die beispielsweise kontinuierlich in gewissen festgelegten Zeitabständen erfasst werden, werden an die Recheneinheit 20 übertragen, welche die übermittelten Bilddaten in einer Bildverarbeitungsroutine zur Bestimmung des Betriebszustands der landwirtschaftlichen Arbeitsmaschine 1, also des Betriebszustands "Straße" S oder "Feld" F, verarbeitet. Die Verarbeitung der Bilddaten in der Bildverarbeitungsroutine erfolgt mittels eines Bilderkennungsalgorithmus. Der in der Bildverarbeitungsroutine von der Recheneinheit 20 herangezogene Bilderkennungsalgorithmus kann dabei wahlweise auf klassischen Methoden der Bildverarbeitung oder aber auf künstlicher Intelligenz basieren.

Sofern ein auf künstlicher Intelligenz basierender Bilderkennungsalgorithmus Anwendung findet, so kann diesem ein trainiertes neuronales Netzwerk, insbesondere ein Artificial Neural Network (ANN) oder ein Convolutional Neural Network (CNN), zugrunde gelegt werden. Gemäß einer Ausführungsform erfolgt die Bestimmung des Betriebszustands "Straße" S oder "Feld" F der landwirtschaftlichen Arbeitsmaschine 1 bei einem auf künstlicher Intelligenz basierenden Bildverarbeitung anhand einer Segmentierung der Bilddaten. Dabei wird in der Bilderkennungsroutine das bzw. die auf den erfassten Bilddaten basierenden Bilder segmentiert, wodurch die Inhalte in den Bilddaten in zusammenhängende Segmente unterteilt werden. Die aus der Segmentierung resultierenden zusammenhängenden Segmente werden dann verschiedenen Klassen zugeordnet, wobei zumindest die Klassen "Straße" oder "Feld" vorhanden sind. Sofern in einem Bild ausschließlich Segmente der Klasse "Straße" und keine Segmente der Klasse "Feld" vorhanden sind, wird von der Recheneinheit 20 der Betriebszustand "Straße" S bestimmt. Sind in einem Bild hingegen ausschließlich Segmente der Klasse "Feld" und keine Segmente der Klasse "Straße" vorhanden, wird von der Recheneinheit 20 der Betriebszustand "Feld" F bestimmt. Werden in einem Bild hingegen Segmente beider Klassen "Straße" und "Feld" identifiziert, kann die Recheneinheit 20 beispielsweise eine Gesamtmenge an Bildpixeln, die den Segmenten der Klasse "Straße" zugeordnet sind, und eine Gesamtmenge an Bildpixeln, die den Segmenten der Klasse "Feld" zugeordnet sind, bestimmen. Beide Gesamtmengen an Bildpixeln werden dann jeweils mit der Menge an Bildpixeln im Bild insgesamt ins Verhältnis gesetzt, sollte der Anteil an Bildpixel der Klasse "Straße" höher sein als der Anteil der Bildpixel der Klasse "Feld", so wird von der Recheneinheit 20 der Betriebszustand "Straße" S bestimmt. Sollten die Anteile entsprechend zugunsten der Klasse "Feld" verteilt sein, so wird von der Recheneinheit 20 der Betriebszustand "Straße" S bestimmt.

Die Recheneinheit 20 ist weiterhin dazu vorgesehen und eingerichtet, anhand des detektierten Betriebszustands "Straße" S oder "Feld" F der landwirtschaftlichen Arbeitsmaschine 1 die Ventileinrichtung 19 zur Einstellung des Reaktionsverhaltens oder des Nichtreaktionsverhaltens des Lenksystems 8 anzusteuern. Die Ansteuerung der Ventileinrichtung zum Einstellen des Reaktions- oder Nichtreaktionsverhaltens kann dabei sowohl mittelbar, wie nachfolgend noch beschrieben, oder aber auch unmittelbar durch die Recheneinheit 20 erfolgen. Vorzugsweise erfolgt die Ansteuerung der Ventileinrichtung 19 bei einem detektierten Betriebszustand "Straße" S oder "Feld" F automatisch durch die Recheneinheit 20, sodass sich das Reaktionsverhalten oder das Nichtreaktionsverhalten ohne Eingriff durch einen Bediener einstellen lässt. Eine solche Ausgestaltung ist insbesondere im Kontext von autonomen landwirtschaftlichen Arbeitsmaschinen 1, beispielsweise von autonomen Traktoren, die fahrerlos betrieben werden, von Vorteil. Gleichermaßen ist diese Ausgestaltung aber auch bei landwirtschaftlichen Arbeitsmaschinen 1 von Vorteil, in deren Kabine 7 sich noch ein Bediener befindet, gleichwohl, ob dieser die landwirtschaftliche Arbeitsmaschine 1 selbsttätig lenkt oder aber eine automatische Lenkung, beispielsweise anhand eines GPS-Signals, erfolgt.

Die Recheneinheit 20 steuert die Ventileinrichtung 19 insbesondere derart an, dass sich bei detektiertem Betriebszustand "Straße" S das Reaktionsverhalten des Lenksystems 8 einstellt, die Zylinderräume 13a, 13b des oder der Lenkzylinder 9 somit hydraulisch miteinander verbunden werden. Bei detektiertem Betriebszustand "Feld" F wird die Ventileinrichtung 19 von der Recheneinheit 20 hingegen derart angesteuert, dass sich das Nichtreaktionsverhalten des Lenksystems 8 einstellt, die Zylinderräume 13a, 13b des oder der Lenkzylinder 9 somit hydraulisch voneinander entkoppelt werden.

Sofern die Ansteuerung der Ventileinrichtung 19 mittelbar über die Recheneinheit 20 erfolgt, umfasst das Lenksystem, wie in FIG. 2 dargestellt, ein Steuerventil 22. Das Steuerventil 22 ist mit der Ventileinrichtung 19 hydraulisch verbunden und dient der Schaltung der Ventileinrichtung 19 zum Einstellen des Reaktionsverhaltens oder des Nichtreaktionsverhaltens des Lenksystems 8. Wird durch das Steuerventil 22 ein Steuerdruck bereitgestellt, so nimmt die Ventileinrichtung 19 die Schaltstellung S2 ein, in der die beiden Zylinderräume 13a, 13b des Lenkzylinders 9 hydraulisch voneinander entkoppelt sind, sich somit das Nichtreaktionsverhalten einstellt. Wird hingegen von dem Steuerventil 22 kein Steuerdruck aufgebracht, so nimmt die Ventileinrichtung 19 die erste Schaltstellung S1 ein, in der die beiden Zylinderräume 13a, 13b hydraulisch miteinander verbunden sind, sich somit das Reaktionsverhalten einstellt. Das Steuerventil 22 wird dabei von der Recheneinheit 20, die mit dem Steuerventil 22 zur Übertragung von Daten, insbesondere Steuersignalen, verbunden ist, basierend auf dem detektierten Betriebszustand "Straße" S oder "Feld" F angesteuert. Das Steuerventil 22 ist vorzugsweise als von der Recheneinheit 20 elektrisch ansteuerbares Wegeventil, besonders bevorzugt als Wege-Proportionalventil, ausgeführt. Wird beispielsweise von der Recheneinheit 20 ein Steuersignal von 0 V an das Steuerventil 22 übermittelt - das Steuerventil 22 wird demnach also von der Recheneinheit 20 nicht angesteuert -, so wird kein Steuerdruck bereitgestellt, wodurch die Ventileinrichtung 19 die erste Schaltstellung S1 einnimmt und sich somit das Reaktionsverhalten des Lenksystems 8 einstellt. Wird hingegen von der Recheneinheit 20 ein Steuersignal von >0 V an das Steuerventil 22 übermittelt - das Steuerventil 22 wird demnach von der Recheneinheit 20 angesteuert -, so wird ein Steuerdruck bereitgestellt, wodurch die Ventileinrichtung 19 die zweite Schaltstellung S2 einnimmt und sich somit das Nichtreaktionsverhalten des Lenksystems 8 einstellt.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

### Bezugszeichenliste

- 1: Landwirtschaftliche Arbeitsmaschine
- 2: Traktor
- 3: Karosserie
- 4: Bodeneingriffsmittel
- 5: Vorderachse
- 6: Hinterachse
- 7: Kabine
- 8: Lenksystem
- 9: Lenkzylinder
- 10: Hauptlenkventil
- 11: Zylindergehäuse
- 12: Kolbenstange
- 13a, 13b: Zylinderraum
- 14: Lenksignalgeber
- 15a, 15b: Hydraulikleitung
- 16: Hauptleitungssystem
- 17: Druckversorgungsquelle
- 18a: Pumpe
- 18b: Pumpenmotor
- 19: Ventileinrichtung
- 20: Recheneinheit
- 21: Sensoreinrichtung
- 22: Steuerventil

- S: Betriebszustand "Straße"
- F: Betriebszustand "Feld"
- S1: Erste Schaltstellung der Ventileinrichtung
- S2: Zweite Schaltstellung der Ventileinrichtung
- E: Erfassungsbereich der Sensoreinrichtung

## Patentansprüche

1. Lenksystem (8) für eine landwirtschaftliche Arbeitsmaschine (1), insbesondere einen Traktor (2), wobei das Lenksystem (8) zumindest einen Lenkzylinder (9) zur Änderung eines Einschlagwinkels von Bodeneingriffsmitteln (4) einer lenkbaren Achse (5, 6) der landwirtschaftlichen Arbeitsmaschine (1), ein hydraulisches Hauptlenkventil (10) zur Druckbeaufschlagung des mindestens einen Lenkzylinders (9), einen Lenksignalgeber (14) zur Betätigung des Hauptlenkventils (10) und eine schaltbare Ventileinrichtung (19), mittels der ein Reaktionsverhalten oder ein Nichtreaktionsverhalten des Lenksystems (8) einstellbar ist, umfasst, **dadurch gekennzeichnet, dass** das Lenksystem (8) eine Recheneinheit (20) umfasst, die mit mindestens einer Sensoreinrichtung (21) an der landwirtschaftlichen Arbeitsmaschine (1) zur Übertragung von Daten verbunden ist, wobei die Recheneinheit (20) dazu vorgesehen und eingerichtet ist, anhand von Daten der Sensoreinrichtung (21) einen Betriebszustand "Straße" (S) oder einen Betriebszustand "Feld" (F) der landwirtschaftlichen Arbeitsmaschine (1) zu detektieren und basierend auf dem detektierten Betriebszustand "Straße" (S) oder "Feld" (F) die Ventileinrichtung (19) zur Einstellung des Reaktionsverhaltens oder des Nichtreaktionsverhaltens des Lenksystems (8), vorzugsweise automatisch, anzusteuern.

2. Lenksystem (8) nach Anspruch 1, **dadurch gekennzeichnet, dass** die Recheneinheit (20) dazu vorgesehen und eingerichtet ist, die Ventileinrichtung (19) derart anzusteuern, dass sich bei detektiertem Betriebszustand "Straße" (S) das Reaktionsverhalten des Lenksystems (8) und bei detektiertem Betriebszustand "Feld" (F) das Nichtreaktionsverhalten des Lenksystems (8) einstellt.

3. Lenksystem (8) nach Anspruch 1 oder 2, **dadurch gekennzeichnet, dass** der mindestens eine Lenkzylinder (9) zwei Zylinderräume (13a, 13b) umfasst, wobei bei eingestelltem Reaktionsverhalten des Lenksystems (8) die beiden Zylinderräume (13a, 13b) des Lenkzylinders (9) mittels der Ventileinrichtung (19) hydraulisch miteinander verbunden sind.

4. Lenksystem (8) nach einem der Ansprüche 1 bis 3, **dadurch gekennzeichnet, dass** bei eingestelltem Nichtreaktionsverhalten des Lenksystems (8) die beiden Zylinderräume (13a, 13b) mittels der Ventileinrichtung (19) hydraulisch voneinander getrennt sind.

5. Lenksystem (8) nach einem der Ansprüche 1 bis 4, **dadurch gekennzeichnet, dass** das Lenksystem (8) ein Steuerventil (22) umfasst, das mit der Ventileinrichtung (19) zum Schalten derselben hydraulisch und mit der Recheneinheit (20) zur Übertragung von Daten verbunden ist, wobei die Recheneinheit (20) dazu vorgesehen und eingerichtet ist, das Steuerventil (22) zum Schalten der Ventileinrichtung (19) anzusteuern.

6. Lenksystem (8) nach Anspruch 5, **dadurch gekennzeichnet, dass** das Steuerventil (22) als ein elektrisch ansteuerbares Wegeventil, vorzugsweise Wege-Proportionalventil, und die Ventileinrichtung (19) als hydraulisch ansteuerbares Wegeventil ausgeführt ist.

7. Lenksystem (8) nach einem der Ansprüche 1 bis 6, **dadurch gekennzeichnet, dass** die mindestens eine Sensoreinrichtung (21) eine Sensoreinrichtung (21) zur Erfassung von Bilddaten ist, wobei die Recheneinheit (20) dazu vorgesehen und eingerichtet ist, die von der Sensoreinrichtung (21) erfassten Bilddaten in einer Bildverarbeitungsroutine zur Bestimmung des Betriebszustands "Straße" (S) oder des Betriebszustands "Feld" (F) der landwirtschaftlichen Arbeitsmaschine (1) zu verarbeiten.

8. Lenksystem (8) nach Anspruch 7, **dadurch gekennzeichnet, dass** die Bildverarbeitungsroutine auf künstlicher Intelligenz beruht, vorzugsweise ein trainiertes neuronales Netzwerk nutzt, besonders bevorzugt ein Artificial Neural Network (ANN) oder ein Convolutional Neural Network (CNN).

9. Lenksystem (8) nach Anspruch 8, **dadurch gekennzeichnet, dass** die Recheneinheit (20) dazu vorgesehen und eingerichtet ist, eine Segmentierung der Bilddaten vorzunehmen, mittels welcher der Betriebszustand "Straße" (S) oder der Betriebszustand "Feld" (F) der landwirtschaftlichen Arbeitsmaschine (1) bestimmbar ist.

10. Lenksystem (8) nach einem der Ansprüche 1 bis 9, **dadurch gekennzeichnet, dass** das Hauptlenkventil (10) ein hydraulisches Hauptlenkventil (10) mit einer festen Übersetzung oder ein elektrohydraulisches Hauptlenkventil (10) mit einer elektrisch einstellbaren Ventilübersetzung ist.

11. Lenksystem (8) nach einem der Ansprüche 1 bis 10, **dadurch gekennzeichnet, dass** das Lenksystem (8) eine Druckversorgungsquelle (17) zur Druckversorgung des Hauptlenkventils (10) umfasst.

12. Landwirtschaftliche Arbeitsmaschine (1), insbesondere Traktor (2), mit einem Lenksystem (8), **dadurch gekennzeichnet, dass** das Lenksystem (8) nach einem der Ansprüche 1 bis 11 ausgebildet ist.

13. Landwirtschaftliche Arbeitsmaschine (1) nach Anspruch 12, **dadurch gekennzeichnet, dass** die mindestens eine Sensoreinrichtung (21) des Lenksystems (8) in einem Front-, Heck- und/oder Seitenbereich der landwirtschaftlichen Arbeitsmaschine (1) angeordnet ist.

14. Landwirtschaftliche Arbeitsmaschine (1) nach Anspruch 12 oder 13, **dadurch gekennzeichnet, dass** die landwirtschaftliche Arbeitsmaschine (1) eine autonome landwirtschaftliche Arbeitsmaschine (1), insbesondere ein autonomer Traktor (2), ist.

15. Verfahren zum Ansteuern eines Lenksystems (8) für eine landwirtschaftliche Arbeitsmaschine (1), insbesondere einen Traktor (2), wobei das Lenksystem (8) zumindest einen Lenkzylinder (9) zur Änderung eines Einschlagwinkels von Bodeneingriffsmitteln (4) einer lenkbaren Achse (5, 6) der landwirtschaftlichen Arbeitsmaschine (1), ein hydraulisches Hauptlenkventil (10) zur Druckbeaufschlagung des mindestens einen Lenkzylinders (9), einen Lenksignalgeber (14) zur Betätigung des Hauptlenkventils (10) und eine schaltbare Ventileinrichtung (19), mittels der ein Reaktionsverhalten oder ein Nichtreaktionsverhalten des Lenksystems (8) eingestellt wird, umfasst, **dadurch gekennzeichnet, dass** das Lenksystem (8) eine Recheneinheit (20) umfasst, die mit mindestens einer Sensoreinrichtung (21) an der landwirtschaftlichen Arbeitsmaschine (1) zur Übertragung von Daten verbunden ist, wobei die Recheneinheit (20) anhand von Daten der Sensoreinrichtung (21) einen Betriebszustand "Straße" (S) oder einen Betriebszustand "Feld" (F) der landwirtschaftlichen Arbeitsmaschine (1) detektiert und basierend auf dem detektierten Betriebszustand "Straße" (S) oder "Feld" (F) die Ventileinrichtung (19) zur Einstellung des Reaktionsverhaltens oder des Nichtreaktionsverhaltens des Lenksystems (8), vorzugsweise automatisch, ansteuert.
